(19) Europäisches Patentamt
European Patent Office
Office européen des brevets

(11) **EP 4 693 994 A1**

(12) **EUROPEAN PATENT APPLICATION**
published in accordance with Art. 153(4) EPC

(43) Date of publication:
**11.02.2026 Bulletin 2026/07**

(21) Application number: **23931576.5**

(22) Date of filing: **07.04.2023**

(51) International Patent Classification (IPC):
**H04L 5/00** (2006.01)

(52) Cooperative Patent Classification (CPC):
**H04L 5/00; H04W 72/232**

(86) International application number:
**PCT/CN2023/087107**

(87) International publication number:
**WO 2024/207516 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **GAO, Xueyuan**
**Beijing 100085 (CN)**

(74) Representative: **Stöckeler, Ferdinand et al**
**Schoppe, Zimmermann, Stöckeler Zinkler, Schenk & Partner mbB Patentanwälte Radlkoferstrasse 2 81373 München (DE)**

(54) **SIGNAL RECEIVING METHOD AND APPARATUS, SIGNAL SENDING METHOD AND APPARATUS, AND STORAGE MEDIUM**

(57) Provided in the present disclosure are a signal receiving method and apparatus, a signal sending method and apparatus, and a storage medium. The signal receiving method comprises: configuring a plurality of sounding reference signal (SRS) resource sets for a terminal, wherein the plurality of SRS resource sets are used by the terminal for performing uplink simulta-
neous transmission of a plurality of panels; sending the plurality of SRS resource sets to the terminal; and receiving SRSs sent by the terminal on the plurality of SRS resource sets. The present disclosure improves the feasibility and reliability of uplink simultaneous transmission of a plurality of panels.

FIG. 2

**Description**

## TECHNICAL FIELD

The disclosure relates to the field of communication technology, in particular to a signal receiving method and apparatus, and a signal sending method and apparatus and a storage medium.

## BACKGROUND

In Release 15 (R15) and Release 16 (R16), the multi-transmission reception point (M-TRP) scenario was not considered, and the uplink adopted single TRP (S-TRP) transmission. Release 17 (R17) enhances the M-TRP uplink transmission under single-downlink control information (S-DCI). In the enhancement objectives of Release 18 (R18), the main goal is to achieve simultaneous coordinated transmission towards the TRPs of a plurality of network devices via a plurality of panels on the terminal, so as to improve transmission reliability and throughput.

## SUMMARY

In order to overcome the problems in the related art, embodiments of the disclosure provide a signal receiving method and apparatus, and a signal sending method and apparatus and a storage medium.

In a first aspect of embodiments of the disclosure, a signal receiving method is provided, which is performed by a network device. The method includes:

configuring a plurality of sounding reference signal (SRS) resource sets for a terminal; in which the plurality of SRS resource sets are used by the terminal to perform a simultaneous transmission from multiple panels (STxMP);
sending the plurality of SRS resource sets to the terminal; and
receiving an SRS sent by the terminal from the plurality of SRS resource sets.

In some embodiments, the plurality of SRS resource sets are used by the terminal to perform a codebook-based STxMP, each SRS resource set includes one or more SRS resources, and each SRS resource corresponds to the same number of SRS resource ports.

In some embodiments, the plurality of SRS resource sets are used by the terminal to perform a non-codebook-based STxMP, each SRS resource set includes SRS resources of a first value, and each SRS resource corresponds one SRS resource port.

In some embodiments, the method further includes:
sending indication information to the terminal, in which the indication information indicates the terminal to perform a single transmission reception point ( S-TRP) transmission or a multi- transmission reception point (M-TRP) transmission.

In some embodiments, the method further includes:

determining a space division multiplexing (SDM) implementation supported by the terminal in a case of the terminal performing the STxMP;
determining a first number of layers, in which the first number of layers is a maximum number of transmission layers supported by the terminal in an S-TRP transmission;
determining a second number of layers, in which the second number of layers is a maximum number of transmission layers supported by the terminal in an SDM transmission, and the SDM transmission belongs to the STxMP; and
determining, based on at least one of the SDM implementation, the first number of layers, or the second number of layers, SRS resources used by the terminal in the STxMP.

In some embodiments, the SDM implementation is any one of:

a first implementation, where a plurality of antenna ports deployed on a plurality of panels share one or more baseband digital ports, and a number of the one or more baseband digital ports is a second value; and
a second implementation, where at least part of antenna ports deployed on a plurality of panels are in a one-to-one correspondence with the one or more baseband digital ports.

In some embodiments, determining, based on at least one of the SDM implementation, the first number of layers, or the second number of layers, the SRS resources used by the terminal in the STxMP includes:

determining that the terminal performs a codebook-based STxMP, and a number of SRS resource ports corresponding to the S-TRP transmission is a third value; and
determining that a number of SRS resource ports corresponding to the SDM implementation is the third value.

In some embodiments, determining, based on at least one of the SDM implementation, the first number of layers, or the second number of layers, the SRS resources used by the terminal in the STxMP includes:

determining that the terminal performs a non-codebook-based STxMP, and a number of SRS resources corresponding to the S-TRP transmission is a third value; and
determining that a number of SRS resources corresponding to the SDM implementation is the third value.

In some embodiments, the third value is equal to the first number of layers; or
the third value is equal to the second number of layers.
In some embodiments, the method further includes:

sending downlink control information (DCI) to the terminal, in which the DCI includes a transmission precoding matrix indicator (TPMI) field;
in which in a case where the first number of layers is not equal to the second number of layers, and the third value is equal to the first number of layers, first codebooks corresponding to the TPMI field indicates partial coherent codewords, a number of physical uplink shared channel (PUSCH) ports actually corresponding to a first TPMI indicated by the TPMI field is a fourth value, and the first TPMI is a TPMI used by the terminal in a case of the terminal sending the PUSCH in different TRP directions; or
in which a number of bits occupied by the TPMI field is determined by a number of first codebooks corresponding to the TPMI field.

In some embodiments, the fourth value is determined by a quotient of a first value divided by a number of cooperative TRPs.
In a second aspect of embodiments of the disclosure, a signal sending method is provided, which is performed by a terminal. The method includes:

receiving a plurality of SRS resource sets configured by a base station, in which the plurality of SRS resource sets are used by the terminal to perform an STxMP; and
sending an SRS to the base station on the plurality of SRS resource sets.

In some embodiments, the plurality of SRS resource sets are used by the terminal to perform a codebook-based STxMP, each SRS resource set includes one or more SRS resources, and each SRS resource corresponds to the same number of SRS resource ports.
In some embodiments, the plurality of SRS resource sets are used by the terminal to perform a non-codebook-based STxMP, each SRS resource set includes SRS resources of a first value, and each SRS resource corresponds one SRS resource port.
In some embodiments, the method further includes:

receiving indication information to the terminal, in which the indication information indicates the terminal to perform an S-TRP transmission or an M-TRP transmission; and
determining, according to the indication information, to perform the S-TRP transmission or the M-TRP transmission.

In some embodiments, the method further includes:

determining an SDM implementation supported in a case of performing the STxMP;
determining a first number of layers, in which the first number of layers is a maximum number of transmission layers supported by the terminal in an S-TRP transmission;
determining a second number of layers, in which the second number of layers is a maximum number of transmission layers supported by the terminal in an SDM transmission, and the SDM transmission belongs to the STxMP; and
determining, based on at least one of the SDM implementation, the first number of layers, or the second number of layers, SRS resources used in a case of performing the STxMP.

In some embodiments, the SDM implementation is any one of:

a first implementation, where a plurality of antenna ports deployed on a plurality of panels share one or more baseband digital ports, and a number of the one or more baseband digital ports is a second value; and
a second implementation, where at least part of antenna ports deployed on a plurality of panels are in a one-to-one correspondence with the one or more baseband digital ports.

In some embodiments, determining, based on at least one of the SDM implementation, the first number of layers, or the second number of layers, the SRS resources used in a case of performing the STxMP includes:

determining to perform a codebook-based STxMP, in which a number of SRS resource ports corresponding to the S-TRP transmission is a third value; and
determining that a number of SRS resource ports corresponding to the SDM implementation is the third value.

In some embodiments, determining, based on at least one of the SDM implementation, the first number of layers, or the second number of layers, the SRS resources SRS resources used in a case of performing the STxMP includes:

determining to perform a non-codebook-based STxMP, in which a number of SRS resources corresponding to the S-TRP transmission is a third value; and
determining that a number of SRS resources corresponding to the SDM implementation is the third value.

In some embodiments, the third value is equal to the first number of layers; or
the third value is equal to the second number of layers.
In some embodiments, the method further includes:

receiving DCI sent by the base station, in which the DCI includes a TPMI field;
in which in a case where the first number of layers is not equal to the second number of layers, and the third value is equal to the first number of layers, first codebooks corresponding to the TPMI field indicates partial coherent codewords, a number of PUSCH ports actually corresponding to a first TPMI indicated by the TPMI field is a fourth value, and the first TPMI is a TPMI used by the terminal in a case of the terminal sending the PUSCH in different TRP directions; or
in which a number of bits occupied by the TPMI field is determined by a number of first codebooks corresponding to the TPMI field.

In some embodiments, the fourth value is determined by a quotient of a first value divided by a number of cooperative TRPs.
In a third aspect of embodiments of the disclosure, a base station is provided, which includes:

a processing module, configured to configure a plurality of SRS resource sets for a terminal; in which the plurality of SRS resource sets are used by the terminal to perform an STxMP;
a sending module, configured to send the plurality of SRS resource sets to the terminal; and
a receiving module, configured to receive an SRS sent by the terminal on the plurality of SRS resource sets.

In a fourth aspect of embodiments of the disclosure, a terminal is provided, which includes:

a receiving module, configured to receive a plurality of SRS resource sets configured by a base station, in which the plurality of SRS resource sets are used by the terminal to perform an STxMP; and
a sending module, configured to send an SRS to the terminal on the plurality of SRS resource sets.

In a fifth aspect of embodiments of the disclosure, a computer-readable storage medium is provided, which stores a computer program, in which the computer program is configured to execute the signal receiving method according to any embodiment above or the signal sending method according to any embodiment above.
In a sixth aspect of embodiments of the disclosure, a communication apparatus is provided, which includes:

a processor; and
a memory for storing instructions executable by the processor;
in which the processor is configured to execute the signal receiving method according to any embodiments above or the signal sending method according to any embodiments above.

The technical solutions provided by the embodiments of the disclosure may include the following beneficial effects.

In the disclosure, the base station may configure the plurality of SRS resource sets for the terminal. When performing the STxMP, the terminal transmits the SRS to the base station based on the SRS resources in the SRS resource sets configured by the base station, which improves a feasibility and a reliability of the STxMP.

It should be understood that the above general description and the following detailed description are merely exemplary and explanatory, and do not limit the disclosure.

## BRIEF DESCRIPTION OF THE DRAWINGS

The accompanying drawings herein are incorporated in and constitute a part of the specification, illustrate embodiments consistent with the disclosure, and together with the specification, serve to explain the principles of the disclosure.

FIG. 1A is a schematic diagram of a multi-panel, M-TRP transmission scenario scheduled by S-DCI according to an embodiment.

FIG. 1B is a schematic diagram of a multi-panel, M-TRP transmission scenario scheduled by multi-DCI according to an embodiment.

FIG. 2 is a schematic flowchart of a signal receiving method according to an embodiment.

FIG. 3 is a schematic flowchart of a signal receiving method according to another embodiment.

FIG. 4A is a schematic diagram of a spatial division multiplexing (SDM) implementation according to an embodiment.

FIG. 4B is a schematic diagram of an SDM implementation according to another embodiment.

FIG. 5 is a schematic flowchart of a signal sending method according to an embodiment.

FIG. 6 is a schematic flowchart of a signal sending method according to another embodiment.

FIG. 7 is a schematic flowchart of a signal sending and receiving method according to an embodiment.

FIG. 8 is a block diagram of a base station according to an embodiment.

FIG. 9 is a block diagram of a terminal according to an embodiment.

FIG. 10 is a schematic diagram of a communication apparatus according to an embodiment.

FIG. 11 is a schematic diagram of a communication apparatus according to another embodiment.

## DETAILED DESCRIPTION

Reference will now be made in detail to embodiments, examples of which are illustrated in the accompanying drawings. When the following description refers to the accompanying drawings, unless otherwise indicated, the same numerals in different accompanying drawings represent the same or similar elements. The implementations described in the following embodiments do not represent all implementations consistent with the disclosure. Instead, those implementations are merely examples of apparatuses and methods consistent with some aspects of the disclosure as detailed in the appended claims.

The terms used in the embodiments of the disclosure are only for the purpose of describing specific embodiments, and are not intended to limit the disclosure. The singular forms of "a" and "the" used in the embodiments and the attached claims of the disclosure are also intended to include plural forms, unless the context clearly indicates other meanings. It is understandable that the term "and/or" as used herein refers to and includes any or all possible combinations of one or more associated listed items.

It is understandable that although the terms "first", "second" and "third" may be used in the embodiments of the disclosure to describe various types of information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

Two different mode configurations for multi-antenna precoder of a physical uplink shared channel (PUSCH) are supported: one is codebook-based transmission, and the other is non-codebook-based transmission. A terminal or a network device may select the mode to use based on whether a reciprocity of uplink and downlink channels holds. The reciprocity means that in a time division duplex (TDD) system, since uplink and downlink operate on the same frequency, when the time interval between uplink and downlink transmissions is sufficiently short, the fading of the uplink channel may be considered essentially the same as the fading of the downlink channel.

When the reciprocity does not hold, the terminal or the network device may choose the codebook-based transmission. When the reciprocity holds, the terminal or the network device may choose either the codebook-based transmission or the non-codebook-based transmission.

Regardless of the precoding mode used by the terminal, the terminal needs to send a sounding reference signal (SRS) for the network device to estimate uplink channel state information (CSI).

The following respectively introduce a codebook-based PUSCH transmission and a non-codebook-based PUSCH transmission in a scenario of S-TRP transmission.

1. The codebook-based PUSCH transmission:

In the codebook-based PUSCH transmission of a new radio (NR) system, the network device needs to configure at most one SRS resource set for the terminal. The at most one SRS resource set is used for the codebook-based uplink transmission, and the SRS resource set may include a plurality of SRS resources.

The network-side device may send an SRS resources indicator (SRI) to indicate an SRS resource selected by the network device for the terminal from the aforementioned SRS resource set. A number of bits occupied by the SRI is

$$\left\lceil \log_2\left(N_{\mathrm{SRS}}\right) \right\rceil$$

, where $N_{\mathrm{SRS}}$ refers to a number of SRS resources included in the SRS resource set.

In addition, the network device determines, based on a measurement result of the uplink CSI, a transmitted precoding matrix indicator (TPMI) and a number of transmission layers actually used by the terminal for transmission, and notifies the terminal the determined TPMI and the number of transmission layers.

In a subsequent uplink transmission of the terminal, uplink data to be transmitted needs to be precoded using the TPMI and the number of transmission layers specified by the network device. Meanwhile, the precoded data is mapped to a corresponding antenna port according to a spatial filter corresponding to the SRS resource indicated by the SRI. Different SRSs are transmitted using different spatial filters, so the precoded data of the terminal needs to be filtered via the spatial filter used by the SRS indicated by the SRI. In this way, uplink data transmission from a single layer to full rank may be supported.

The network device may indicate the TPMI and the number of transmission layers based on a terminal capability. Here, the terminal capability includes three types: full coherent, partial coherent, and non-coherent, which characterize a correlation capability of the antenna port.

The NR system defines three types of antenna coherent transmission capabilities of the terminal:

full coherent: where all antennas of the terminal may perform a coherent transmission;
partial coherent: where antennas within the same coherent transmission pair of the terminal may perform the coherent transmission, but the coherent transmission cannot be performed between coherent transmission pairs; and
non-coherent: where no antennas of the terminal may perform the coherent transmission.

For example, assuming that the NR system allows the network device to configure two SRS resources for the terminal, these two SRS resources are used by the terminal to perform channel sounding for the codebook-based uplink transmission. The two SRS resources contain the same number of SRS antenna ports and have the same time domain type, that is, both SRS resources are periodic SRS, semi-persistent SRS, or non-periodic SRS. When the network device configures two SRS resources for the terminal for the codebook-based uplink transmission, the network device may indicate one SRS resource corresponding to the TPMI and the number of transmission layers to the terminal via the SRI.

2. Non-codebook-based PUSCH transmission:

The terminal may first send its capability to the network device, where the terminal capability indicates a maximum number of SRS resources that the terminal can simultaneously transmit.

Assuming that the network device sends an SRI to the terminal in timeslot n, the SRI indicates a valid resource of the most recent SRS transmission before timeslot n.

The terminal may determine the TPMI according to a maximum number of transmission layers (maxRank) in a higher-layer parameter PUSCH configuration (PUSCH-Config), and the number of SRS resources indicated by the SRI is less than or equal to maxRank.

The network device may configure an associated channel state information-reference signal (CSI-RS) resource for channel measurement for the SRS resource set used for the non-codebook-based uplink transmission. The terminal obtains a precoder for SRS transmission in the SRS resource set for the non-codebook-based uplink transmission according to the associated CSI-RS resource.

For the non-codebook-based uplink transmission, in practical systems, it is generally necessary to measure the downlink-configured CSI-RS. The terminal obtains, by utilizing the uplink-downlink reciprocity, uplink channel information by measuring downlink signals. The process mainly includes the following steps.

A network-side device configures an associated downlink CSI-RS for non-codebook-based transmission, in which the downlink CSI-RS is used for downlink channel sounding of a terminal.

The terminal selects a precoding matrix via calculation on a downlink channel, and simultaneously sends an SRS in each precoded beam direction on a configured SRS resource set.

The network-side device performs uplink channel detection on the SRS, and at the same time performs resource scheduling for the terminal, notifies the terminal via a downlink signaling, and selects a beam in the precoding matrix via an SRI.

The terminal uses the modified precoding matrix to determine an actual precoder and an allowed number of layers, and sends the PUSCH. The terminal determines the TPMI according to the higher-layer parameter maxRank, and the number of SRS resources indicated by the SRI is not greater than the maxRank.

To enable the network to modify the precoding matrix actually used by the terminal, for non-codebook-based transmission, the network needs to configure an SRS resource set for the terminal.

For the non-codebook transmission scheme, the network-side device may configure one SRS resource set for the terminal, in which the one SRS resource set contains 1 to 4 SRS resources, and each SRS resource includes one SRS port. When the network-side device configures a plurality of SRS resources for the terminal for the non-codebook-based uplink transmission, the plurality of SRS resources have the same time domain type, i.e., all SRS resources are periodic SRS, semi-persistent SRS, or aperiodic SRS. The network device may indicate one or more SRS resources to the terminal via the SRI for determining PUSCH precoder, and the number of SRS resources corresponding to the SRI is the number of streams for PUSCH transmission. When the network device configures only one SRS resource for the terminal for the non-codebook-based uplink transmission, the DCI used for uplink grant may not include an SRI field.

An uplink PUSCH transmission refers to a transmission towards the TRPs of a plurality of network devices. In R17, a coordinated transmission under a time division multiplexing (TDM) transmission mode is mainly standardized: different repetitions of the same information on the PUSCH are sent to different TRPs of the network device in a time-division manner via different transmission occasions (TOs) in the time domain. This method has relatively low requirements on terminal capabilities, does not require a capability of supporting simultaneous transmission of beams, and has relatively large transmission latency.

For the uplink, for PUSCH channels oriented to different TRPs, actual channels passed may have significantly different spatial characteristics. Therefore, it is considered that quasi-co-locations of PUSCH channels in different transmission directions are different.

R15 and R16 do not consider the M-TRP scenario, and the uplink adopted the S-TRP transmission. R17 enhances the M-TRP uplink transmission under S-DCI, and the uplink PUSCH transmission refers to the transmission towards the TRPs of a plurality of network devices. In R17, the coordinated transmission under the TDM transmission mode is mainly standardized: different repetitions of the same information on the PUSCH are sent to different TRPs of the network device in the time-division manner through via TOs in the time domain. This method has relatively low requirements on terminal capabilities-only PUSCH towards one TRP direction needs to be sent in each TO, so it does not require the capability of supporting simultaneous transmission of beams, and has relatively large transmission latency.

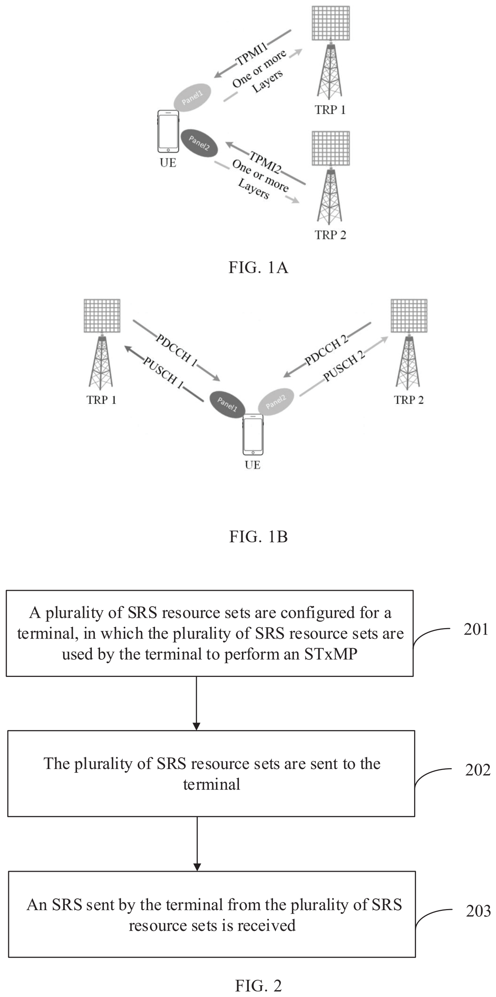

In the enhancement objectives of R18, the main goal is to enable simultaneous coordinated transmission from a plurality of panels of the terminal to the TRPs of a plurality of network devices to improve transmission reliability and throughput, while effectively reducing transmission latency in M-TRP scenarios. However, this requires the terminal to have the capability of transmitting a plurality of beams simultaneously. The PUSCH transmission may be based on multi-panel, M-TRP transmission scheduled by a single PDCCH (i.e., S-DCI), as shown in FIG. 1A, or based on multi-panel, M-TRP transmission scheduled by multiple DCIs, as shown in FIG. 1B.

The terminal is generally configured with a plurality of physical panels, and capabilities of different panels may vary. For example, different panels may have different numbers of SRS ports and may support different maximum numbers of data transmission layers. For instance, one panel supports a maximum of 2-layer transmission, while another panel supports a maximum of 4-layer transmission. A network scheduler will determine whether the terminal is currently suitable for a simultaneous transmission from multiple panels (STxMP). When the terminal is suitable for and scheduled for such STxMP, the network may directly or indirectly indicate relevant transmission parameters, including specific beam indication information for the terminal, a number of data layers used for transmission, an allocation of demodulation reference signal (DMRS) ports, and precoding indication information.

In R18, the transmission schemes supported by STxMP for S-DCI-based PUSCH include the following.

An SDM scheme: in which different parts of one transport block of PUSCH are transmitted on the same time-frequency resources towards two different TRPs via respective DMRS ports or port combinations allocated on different panels. Different panels, TRPs, and TOs are associated with different beams respectively.

A single frequency network (SFN) SDM scheme: in which one transport block of PUSCH is transmitted on the same time-frequency resources towards two different TRPs via the same DMRS ports or port combinations allocated on different panels. Different panels, TRPs, and TOs are associated with different beams respectively.

In R17, for the non-codebook-based M-TRP transmission and the codebook-based M-TRP transmission, the SRI field in DCI indicates SRS resources in the SRS resource set. Since R17 supports two SRS resource sets, in the non-codebook-based M-TRP PUSCH repetition transmission, DCI formats 0_1 and 0_2 contain two SRI fields, referred to as a first SRI field and a second SRI field respectively, in which the first SRI field and the second SRI field are associated with the two SRS resource sets respectively. Each SRI field indicates an SRI for one TRP. A design of the first SRI field is based on the framework of R15 and R16, and all repetition transmissions use the same number of layers.

For the non-codebook-based transmission, the first SRI field is used to determine elements in the second SRI field, and the second SRI field only contains SRI combinations associated with the number of layers indicated by the first SRI field. A number of bits N2 of the second SRI field is determined by a maximum number of code points for each rank among all ranks associated with the first SRI field.

In the codebook-based M-TRP PUSCH repetition transmission, DCI formats 0_1 and 0_2 indicate two TPMI fields, referred to as a first TPMI field and a second TPMI field respectively. The first TPMI field has the same design as a TPMI field in R15 and R16 (including a TPMI index and a number of layers), while the second TPMI field only contains a second TPMI index, with a number of layers being the same as that indicated by the first TPMI field. The first TPMI field is used to determine elements in the second TPMI field, and the second TPMI field only contains a TPMI associated with the number of layers indicated by the first TPMI field. A number of bits M2 of the second TPMI field is determined by the maximum number of code points for each rank among all ranks associated with the first TPMI field.

A definitions of an indication field that dynamically indicates the S-TRP transmission and the M-TRP transmission scheduling is as follows.

In the S-TRP transmission, the first SRI field and the first TPMI field may be associated with any SRS resource, as shown in Table 1.

Table 1

| Code point | SRS resource set | SRI field (for the codebook-based transmission or the non-codebook-based transmission)/TPMI field (for the codebook-based transmission) |
|---|---|---|
| 00 | S-TRP transmission mode, configured with a first SRS resource set (a first TRP) | The first SRI field/the first TPMI field |
| 01 | S-TRP transmission mode, configured with a second SRS resource set (a second TRP) | The first SRI field/the first TPMI field |
| 10 | M-TRP transmission mode (in the order of TRP1, TRP2). The first SRI/TPMI field corresponds to the first SRS resource set, and the second SRI/TPMI field corresponds to the second SRS resource set. | The first SRI field and the second SRI field/the first TPMI field and the second TPMI field. |
| 11 | M-TRP transmission mode (in the order of TRP2, TRP1) The first SRI/TPMI field corresponds to the first SRS resource set, and the second SRI/TPMI field corresponds to the second SRS resource set. | The first SRI field and the second SRI field/the first TPMI field and the second TPMI field. |

In the uplink enhancement of R18, considerations are given to how to support higher uplink throughput and more reliable transmission performance via multi-panel, M-TRP simultaneous uplink transmission.

In the current standardization discussions on R18 STxMP, the S-DCI-based SDM and SFN transmission schemes for PUSCH are supported. Currently, symmetric panels may be supported to implement R18 STxMP. However, considering that terminals differ in their specific processing and implementations-which means the corresponding SDM implementations will also vary-a problem that needs to be further addressed is: after the terminal reports the SDM implementation scheme it supports, how the base station configures, based on the SDM implementation scheme supported by the terminal, the SRS resource set for the terminal to perform the STxMP.

First, a signal receiving method provided in the disclosure is introduced from a base station side.

An embodiment of the disclosure provides a signal receiving method. As shown in FIG. 2, which is a flowchart of a signal receiving method according to an embodiment, the method may be performed by a base station and may include the following steps.

In step 201, a plurality of SRS resource sets are configured for a terminal, in which the plurality of SRS resource sets are used by the terminal to perform an STxMP.

In a possible implementation, one or more SRS resource sets configured by the base station for the terminal may be used by the terminal to perform a codebook-based STxMP.

In another possible implementation, a first SRS resource set configured by the base station for the terminal may be used by the terminal to perform a non-codebook-based STxMP.

In the embodiments of the disclosure, under the configuration of the STxMP, the terminal may be supported to perform an S-TRP transmission and an M-TRP transmission. In the disclosure, the M-TRP transmission mainly refers to an SDM implementation.

In a possible implementation, in a case where the plurality of SRS resource sets are used by the terminal to perform the codebook-based STxMP, each one of the plurality of SRS resource sets configured by the base station includes one or more SRS resources, and each SRS resource corresponds to the same number of SRS resource ports.

In an example, the number of SRS resource ports corresponding to each SRS resource may be equal to a first number of layers, where the first number of layers is a maxRank supported by the terminal in the S-TRP transmission.

In the disclosure, the maxRank refers to a maximum multiple-input multiple-output (MIMO) transmission layers of the PUSCH configured by the network device for the terminal.

In a possible implementation manner, in a case where the plurality of SRS resource sets are used by the terminal to perform the non-codebook-based STxMP, each SRS resource set includes SRS resources of a first value, and each SRS resource corresponds one SRS resource port. That is, each SRS resource set includes single-port SRS resources of the first value.

In an example, the first value is equal to the first number of layers, where the first number of layers is the maxRank supported by the terminal in the S-TRP transmission.

In the embodiments of the disclosure, the base station may send indication information to the terminal, and the indication information may indicate the terminal to perform the S-TRP transmission or the M-TRP transmission

In an example, the indication information may be carried in DCI. Specifically, the indication information may be carried via an indication field in the DCI, in which the indication filed is used to indicate the SRS resource set(s). As shown in Table 1, for instance, codewords of the indication information are bit values corresponding to the first column in Table 1. When the bit value is 00 or 01, the indication information indicates the terminal to perform the S-TRP transmission. When the bit value is 10 or 11, the indication information indicates the terminal to perform the M-TRP transmission.

In step 202, the plurality of SRS resource sets are sent to the terminal.

In the embodiments of the disclosure, the base station may send the plurality of SRS resource sets configured for the terminal to the terminal.

In step 203, an SRS sent by the terminal from the plurality of SRS resource sets is received.

In a possible implementation, when the terminal performs the codebook-based STxMP, regardless of whether the terminal performs the S-TRP transmission or the M-TRP transmission, the base station determines that the terminal uses the plurality of SRS resources included in the plurality of SRS resource sets to send the SRS. In this case, the base station also needs to determine the number of SRS resource ports corresponding to the SRS resource.

In another possible implementation, when the terminal performs the non-codebook-based STxMP, the terminal may use at least part of the SRS resources included in the plurality of SRS resource sets to send the SRS. In this case, the SRS resource corresponds to one SRS resource port, and the base station needs to determine the SRS resource(s) used by the terminal among the plurality of SRS resource sets.

The process by which the base station determines the number of SRS resource ports or the SRS resource(s) used by the terminal is introduced in subsequent embodiments and will not be elaborated here.

When the terminal performs the codebook-based transmission, the base station may receive the SRS sent by the terminal from the plurality of SRS resources configured for the terminal and corresponding SRS resource ports, and estimate an uplink CSI based on the received SRS.

Alternatively, when the terminal performs the non-codebook-based transmission, the base station may receive the SRS sent by the terminal from at least part of the SRS resources configured for the terminal, and estimate the uplink CSI based on the received SRS.

In the above embodiments, the base station may configure the plurality of SRS resource sets for the terminal, and receive the SRS sent by the terminal to the base station based on the SRS resources in the SRS resource sets configured by the base station when the terminal performs the STxMP, which improves a feasibility and a reliability of the STxMP.

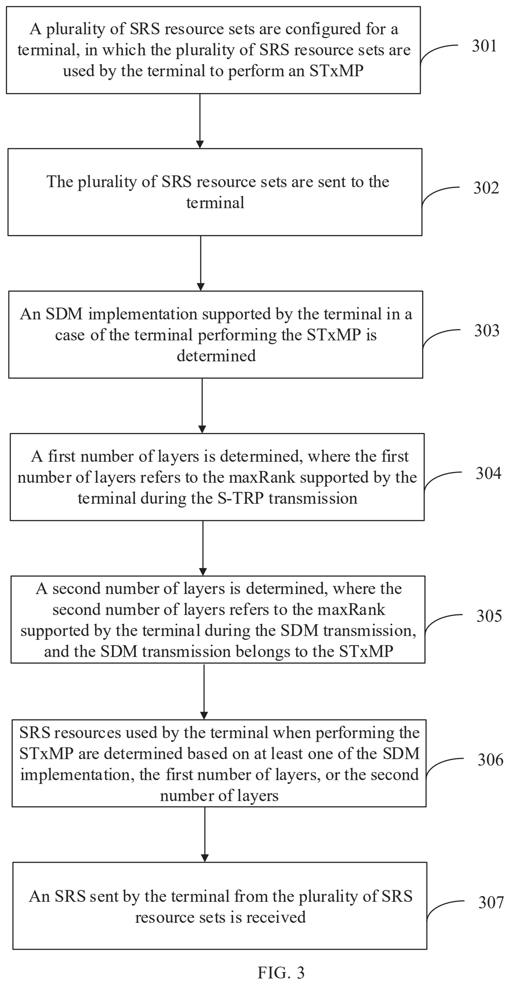

In some embodiments, referring to FIG. 3, FIG. 3 is a flowchart of a signal receiving method according to an embodiment. The method may be executed by a base station, and may include the following steps.

In step 301, a plurality of SRS resource sets are configured for a terminal, in which the plurality of SRS resource sets are used by the terminal to perform an STxMP.

The implementation of step 301 is similar to that of step 201 described above, and will not be repeated here.

In step 302, the plurality of SRS resource sets are sent to the terminal.

In the embodiments of the disclosure, the base station may send the plurality of SRS resource sets configured for the terminal to the terminal.

In step 303, an SDM implementation supported by the terminal in a case of the terminal performing the STxMP is determined.

In a possible implementation, the disclosure provides two SDM implementations, which are respectively a first implementation and a second implementation.

In the first implementation, a plurality of antenna ports deployed on a plurality of panels share one or more baseband digital port, and a number of the one or more baseband digital ports is a second value. In this case, the number of the one or more baseband digital ports is less than or equal to a number of antenna ports.

Wherein the number of baseband digital ports (one or more) is equal to a number of baseband transmission chains (Tx Chains). For example, when the terminal has 4 baseband digital ports, the terminal supports 4 baseband Tx Chains.

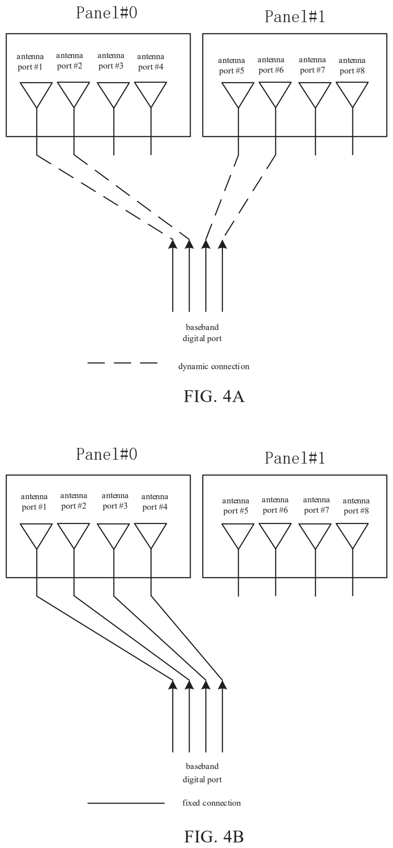

As shown in FIG. 4A, for example, it is assumed that the terminal has a total of 4 baseband digital ports, which are digital port #1 to digital port #4 respectively. The terminal is deployed with two panels, which are panel #0 and panel #1 respectively. Each panel includes 4 antenna ports, corresponding to antenna port #1 to antenna port #8. The antenna port #1 to antenna port #8 share the 4 baseband digital ports, that is, a connection mode between antenna ports and baseband digital ports is not fixed and may be dynamically scheduled by the network device.

In the second implementation, at least part of antenna ports deployed on a plurality of panels are in a one-to-one correspondence with the one or more baseband digital ports.

As shown in FIG. 4B, for example, a connection relationship between antenna ports and baseband digital ports cannot be changed in this case.

The SDM implementation supported by the terminal may be any of the aforementioned implementations.

In a possible implementation, the base station may determine the SDM implementation supported by the terminal based on a terminal capability indication information reported by the terminal.

In one example, the base station may receive the terminal capability indication information reported by the terminal via radio resource control (RRC).

The terminal may report the supported SDM implementation via one information element (IE) in an RRC signaling, for example:

```
UL_STxMP_SDMscheme {"scheme1", "scheme2"}
```

where the scheme1 indicates the first implementation, and the scheme2 indicates the second implementation.

When the terminal reports "scheme1" via the IE, the base station determines that the SDM implementation supported by the terminal is the aforementioned first implementation. When the terminal reports "scheme2" via the IE, the base station determines that the SDM implementation supported by the terminal is the aforementioned second implementation.

In another possible implementation, the base station may determine the SDM implementation supported by the terminal based on layer number indication information reported by the terminal. The layer number indication information indicates the maxRank supported by the terminal when configured for the STxMP.

In one example, the terminal reports a plurality of maxRanks, and the layer number indication information may indicate the following respectively:

a maxRank supported by the terminal during the S-TRP transmission; and
a maxRank supported by the terminal during the SDM transmission, where the SDM transmission belongs to the STxMP.

In the disclosure, the maxRank refers to the maximum MIMO layers of the PUSCH configured for the terminal by the network device.

For example, when the terminal determines that the supported SDM implementation is the aforementioned first implementation, the layer number indication information reported by the terminal to the base station may indicate a plurality of maxRanks, and values of the plurality of maxRanks are not equal with each other.

When the base station receives the plurality of maxRanks and the plurality of maxRanks are not equal with each other, the base station determines that the SDM implementation supported by the terminal is the aforementioned first implementation.

For example, when the terminal determines that the supported SDM implementation is the aforementioned second implementation, the layer number indication information reported by the terminal to the base station may indicate a plurality of maxRanks, and values of the plurality of maxRanks are equal with each other.

When the base station receives the plurality of maxRanks and the plurality of maxRanks are equal with each other, the base station determines that the SDM implementation supported by the terminal includes the aforementioned second implementation.

In another example, when the terminal sends one maxRank via the layer number indication signal, the layer number indication information may indicate that:

the maxRank supported by the terminal during the S-TRP transmission is equal to the maxRank supported by the terminal during the SDM transmission.

For example, the terminal may indicate the supported SDM implementation via a number of reported maxRank.

For example, when the terminal determines that the supported SDM implementation is the first implementation, the layer number indication information reported by the terminal to the base station may indicate a plurality of maxRanks, and values of the plurality of maxRanks may be equal or unequal with each other.

When the base station receives the plurality of maxRanks maximum transmission layers, the base station determines that the SDM implementation supported by the terminal includes the aforementioned first implementation.

For example, when the terminal determines that the supported SDM implementation is the aforementioned second implementation, the layer number indication information reported by the terminal to the base station may indicate one maxRank.

When the base station receives the one maxRank, the base station determines that the SDM implementation supported by the terminal includes the aforementioned second implementation.

In step 304, a first number of layers is determined, where the first number of layers refers to the maxRank supported by the terminal during the S-TRP transmission.

In the embodiments of the disclosure, the base station may determine the first number of layers based on the layer number indication information reported by the terminal.

In step 305, a second number of layers is determined, where the second number of layers refers to the maxRank supported by the terminal during the SDM transmission, and the SDM transmission belongs to the STxMP.

In the embodiments of the disclosure, the base station may determine the second number of layers based on the layer number indication information reported by the terminal.

In step 306, SRS resources used by the terminal when performing the STxMP are determined based on at least one of the SDM implementation, the first number of layers, or the second number of layers.

In a possible implementation, when the SDM implementation supported by the terminal is the aforementioned first implementation and the first number of layers is not equal to the second number of layers, the base station may determine the SRS resources using any of the following methods.

Method 1: where a number of SRS resource ports or a number of SRS resources selected by the terminal is equal to the first number of layers.

1-1 For a codebook transmission:

It is determined that the terminal performs a codebook-based STxMP. A number of SRS resource ports corresponding to the S-TRP transmission is a third value, and a number of SRS resource ports corresponding to the SDM implementation is the third value, where the third value is equal to the first number of layers.

For example, the first number of layers is A, and the second number of layers is B. Each SRS resource set configured by the base station includes one or more SRS resources, and the number of SRS resource ports corresponding to each SRS resource is equal to the first number of layers, that is, the number of SRS resource ports corresponding to each SRS resource configured by the base station is A.

The terminal uses all SRS resources included in the plurality of SRS resource sets when the terminal sending the SRS.

The number of SRS resource ports used by the terminal when performing the S-TRP transmission is A, and the number of SRS resource ports corresponding to the SDM implementation supported by the terminal is also A.

It should be noted that the base station also sends DCI to the terminal. In the disclosure, the DCI is S-DCI, which includes a TPMI field.

In an example, a first codebook corresponding to the TPMI field indicates a partial coherent codeword. The TPMI field indicates a first TPMI, and a number of PUSCH ports corresponding actually to the first TPMI is a fourth value. The first TPMI is a TPMI used by the terminal when sending PUSCH in different TRP directions.

The first codebook is a partial coherent codebook among codebooks with a maximum RANK number of B and with a number of PUSCH ports of A.

For example, Table 2 shows a 4-antenna single-stream codebook.

Table 2

| TPMI index value | W (Sorted in ascending order of TPMI index values from left to right) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

The first codebook refers to the codebooks with index values 4-11 in Table 2.

Herein, the fourth value may be determined by a quotient of the first value divided by a number of cooperative TRPs. The first value is equal to the first number of layers.

For example, when the first number of layers A=4, the second number of layers B=2, an RANK value corresponding to the configuration for the terminal performing the STxMP is B+B, and the number of cooperative TRPs is 2, then the fourth value is 4/2=2. The SRS transmitted on each panel corresponds to 4 ports, and thus corresponds to a selection of a TPMI codebook with 4 ports. However, a number of effective ports (i.e., the fourth value) included in the first TPMI that may actually be transmitted in this direction is 2, and a total number of PUSCH ports transmitted in the two TRP directions corresponds to 4. An actual number of transmitted RANKs is a number of RANKs scheduled in the direction of each TRP. An RANK combination with a maximum total of 4 is supported. For instance, the RANK numbers on each panel are {1+1}, {1+2}, {2+1}, and {2+2} respectively.

In this case, a number of bits occupied by the TPMI field in DCI remains unchanged.

In another example, the number of bits occupied by the TPMI field may be re-determined based on a number of first codebooks.

For example, a first codebook set may be stipulated by a protocol, and the number of bits occupied by the TPMI field may be determined by the number of first codebooks in this set, which is smaller than the number of bits occupied by an existing TPMI field in the protocol.

For example, a new codebook set is re-stipulated based on Table 2, as shown in Table 3.

Table 3

| TPMI index value | W, (Sorted in ascending order of TPMI index values from left to right) | | | | | | | |
|---|---|---|---|---|---|---|---|---|
| 0-7 | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ |

The number of bits occupied by the TPMI field may be determined based on Table 3, and the number of bits may be 3.

1-2. For a non-codebook-based transmission:

It is determined that the terminal performs a non-codebook-based STxMP, where a number of SRS resources corresponding to the S-TRP transmission is a third value. It is determined that a number of SRS resources corresponding to the SDM implementation is the third value, with the third value being equal to the first number of layers.

For example, when the first number of layers is A, the second number of layers is B, each SRS resource set configured by the base station includes A single-port SRS resources, the base station determines that the terminal performs the non-codebook-based STxMP, the S-TRP transmission corresponds to A S-port SRS resources, and the SDM implementation mode (which is the first mode in this case) corresponds to A single-port SRS resources.

Method 2: where a number of SRS resource ports or a number of SRS resources selected by the terminal is equal to the second number of layers.

2-1. For a codebook-based transmission:

It is determined that the terminal performs a codebook-based STxMP. A number of SRS resource ports corresponding to the S-TRP transmission is a third value, and a number of SRS resource ports corresponding to the SDM implementation is the third value, where the third value is equal to the second number of layers.

The terminal may select SRS resource ports of the third value from SRS resource ports of the first value configured by the base station to transmit the SRS, where the first value is equal to the first number of layers and the third value is equal to the second number of layers.

For example, the first number of layers is A, and the second number of layers is B. Each SRS resource set configured by the base station includes one or more SRS resources, and the number of SRS resource ports corresponding to each SRS resource is A. The base station determines that the terminal selects B SRS resource ports from the A SRS resource ports according to a preset rule.

The base station determines that index values of the SRS resource ports selected by the terminal may satisfy any of the following: continuous; discontinuous; determined by the terminal.

In an example, a protocol may stipulate that the index values of the SRS resource ports selected by the terminal are continuous, such as the SRS resource ports selected by the terminal are the first B SRS resource ports.

For example, when A=4 and B=2, the base station determines that the terminal fixedly uses the first 2 SRS resource ports, i.e., port #0 and port #1.

In another example, a protocol may stipulate that the index values of the SRS resource ports selected by the terminal are discontinuous, e.g., the terminal selects SRS resource ports at intervals.

For example, when A=4 and B=2, the base station determines that the terminal fixedly uses SRS resource ports #0 and #2.

In another example, the base station determines that the terminal selects the SRS resource ports by the terminal itself based on a port measurement result. For instance, the terminal may select B SRS resource ports with better channel conditions. In this case, the base station needs to maintain monitoring on all A ports.

2-2. For a non-codebook-based transmission:

It is determined that the terminal performs a non-codebook-based STxMP, where a number of SRS resources corresponding to the S-TRP transmission is a third value. It is determined that a number of SRS resources corresponding to the SDM implementation is the third value, with the third value being equal to the second number of layers.

The terminal may select SRS resources of the third value from single-port SRS resources of the first value configured by the base station to transmit the SRS, where the first value is equal to the first number of layers and the third value is equal to the second number of layers.

The base station determines that index values of the SRS resources selected by the terminal may satisfy any of the following: continuous; discontinuous; determined by the terminal.

In an example, a protocol may stipulate that the index values of the SRS resources selected by the terminal are continuous, such as the SRS resources selected by the terminal are the first B SRS resources.

For example, when A=4 and B=2, the base station determines that the terminal fixedly uses the first 2 SRS resources in the SRS resource set, i.e., SRS resource #0 and SRS resource #1.

In another example, a protocol may stipulate that the index values of the SRS resources selected by the terminal are discontinuous, e.g., the terminal selects SRS resources at intervals.

For example, when A=4 and B=2, the base station determines that the terminal fixedly uses SRS resource #0 and SRS resource #2 in the SRS resource set.

In another example, the base station determines that the terminal selects the SRS resources itself. For instance, the terminal may randomly select B SRS resources, or select B SRS resources in other ways, and this disclosure does not impose limitations thereon.

In another possible implementation, when the SDM implementation supported by the terminal is the aforementioned second implementation and the first number of layers is equal to the second number of layers, the base station may determine the SRS resources using any of the following methods.

Method 3: where a number of SRS resource ports or a number of SRS resources selected by the terminal is equal to the first number of layers (or the second number of layers).

3-1 For a codebook transmission:

It is determined that the terminal performs a codebook-based STxMP, where a number of SRS resource ports corresponding to the S-TRP transmission is a third value, and a number of SRS resource ports corresponding to the SDM implementation is the third value. The third value is equal to the first number of layers.

For example, the first number of layers is A, the second number of layers is B, and A is equal to B. Each SRS resource set configured by the base station includes one or more SRS resources, and the number of SRS resource ports corresponding to each SRS resource is equal to the first number of layers, i.e., the number of SRS resource ports corresponding to each SRS resource configured by the base station is A.

The terminal uses all SRS resources included in the plurality of SRS resource sets when the terminal sending the SRS.

The number of SRS resource ports used by the terminal when performing the S-TRP transmission is A, and the number of SRS resource ports corresponding to the SDM implementation supported by the terminal is also A.

Since A is equal to B, the terminal may directly use the SRS resources included in the plurality of SRS resource sets configured by the base station and the corresponding SRS resource ports to transmit the SRS.

3-2. For a non-codebook-based transmission:

It is determined that the terminal performs a codebook-based STxMP, where a number of SRS resource ports corresponding to the S-TRP transmission is a third value, and a number of SRS resource ports corresponding to the SDM implementation is the third value. The third value is equal to the first number of layers.

In another possible implementation, when the SDM implementation supported by the terminal is the aforementioned second implementation and the first number of layers is not equal to the second number of layers, the base station may determine the SRS resources using any of the following methods.

Method 4: where reusing the aforementioned Method 1 or Method 2 to determine the SRS resources.

The specific implementation has been introduced in the aforementioned embodiments, and will not be repeated here.

In the embodiments of the disclosure, it should also be noted that the base station may also send indication information in an explicit signaling to the terminal, such as SRS resource indication information carried in DCI, to indicate the SRS resources used by the terminal and/or the corresponding SRS resource ports, which is not limited in the disclosure.

In step 307, an SRS sent by the terminal from the plurality of SRS resource sets is received.

The specific implementation is similar to that of step 203 above, and will not be repeated here.

In the above embodiments, the base station may configure a plurality of SRS resource sets for the terminal, determine the number of SRS resource ports or the SRS resources used by the terminal, and receive the SRS transmitted by the terminal from the corresponding SRS resources and SRS resource ports, which improves the feasibility and reliability of the STxMP.

A signal sending method provided in the disclosure is introduced from a terminal side.

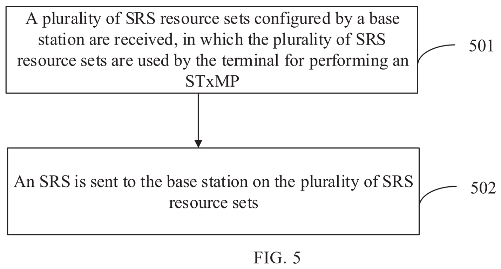

An embodiment of the disclosure provides a signal sending method. As shown in FIG. 5, which is a flowchart of a signal sending method according to an embodiment, the method may be executed by a terminal and may include the following steps.

In step 501, a plurality of SRS resource sets configured by a base station are received, in which the plurality of SRS resource sets are used by the terminal for performing an STxMP.

In a possible implementation, one or more SRS resource sets configured by the base station for the terminal may be used by the terminal to perform a codebook-based STxMP.

In another possible implementation, a first SRS resource set configured by the base station for the terminal may be used by the terminal to perform a non-codebook-based STxMP.

In the embodiments of the disclosure, under the configuration of the STxMP, the terminal may be supported to perform an S-TRP transmission and an M-TRP transmission. In the disclosure, the M-TRP transmission mainly refers to an SDM implementation.

In a possible implementation, in a case where the plurality of SRS resource sets are used by the terminal to perform the codebook-based STxMP, each one of the plurality of SRS resource sets configured by the base station includes one or more SRS resources, and each SRS resource corresponds to the same number of SRS resource ports.

In an example, the number of SRS resource ports corresponding to each SRS resource may be equal to a first number of layers, where the first number of layers is a maxRank supported by the terminal in the S-TRP transmission.

In the disclosure, the maxRank refers to a maximum MIMO transmission layers of the PUSCH configured by the network device for the terminal.

In a possible implementation manner, in a case where the plurality of SRS resource sets are used by the terminal to perform the non-codebook-based STxMP, each SRS resource set includes SRS resources of a first value, and each SRS resource corresponds one SRS resource port. That is, each SRS resource set includes single-port SRS resources of the first value.

In an example, the first value is equal to the first number of layers, where the first number of layers is the maxRank supported by the terminal in the S-TRP transmission.

In the embodiments of the disclosure, the base station may send indication information to the terminal, and the indication information may indicate the terminal to perform the S-TRP transmission or the M-TRP transmission

In an example, the indication information may be carried in DCI. Specifically, the indication information may be carried via an indication field in the DCI, in which the indication filed is used to indicate the SRS resource set(s). As shown in Table 1, for instance, codewords of the indication information are bit values corresponding to the first column in Table 1. When the bit value is 00 or 01, the indication information indicates the terminal to perform the S-TRP transmission. When the bit value is 10 or 11, the indication information indicates the terminal to perform the M-TRP transmission.

The terminal may receive the plurality of SRS resource sets sent by the base station.

In step 502, an SRS is sent to the base station on the plurality of SRS resource sets.

In a possible implementation, when the terminal performs the codebook-based STxMP, regardless of whether the terminal performs the S-TRP transmission or the M-TRP transmission, the terminal uses the plurality of SRS resources included in the plurality of SRS resource sets to send the SRS. In this case, the terminal also needs to determine the number of SRS resource ports corresponding to the SRS resource.

In another possible implementation, when the terminal performs the non-codebook-based STxMP, the terminal may use at least part of the SRS resources included in the plurality of SRS resource sets to send the SRS. In this case, the SRS resource corresponds to one SRS resource port, and the terminal also needs to determine the SRS resource(s) to use from the plurality of SRS resource sets.

The process by which the terminal determines the number of used SRS resource ports or the used SRS resource(s) is introduced in subsequent embodiments and will not be elaborated here.

When the terminal performs the codebook-based transmission, the terminal may send the SRS to the base station on the plurality of SRS resources and corresponding SRS resource ports configured by the base station for the terminal.

Alternatively, when the terminal performs the non-codebook-based transmission, the terminal may send the SRS to the base station on at least part of the SRS resources configured by the base station for the terminal.

In the above embodiments, when the terminal performs the STxMP, the terminal may send the SRS to the base station based on the SRS resources in the SRS resource sets configured by the base station, which improves the feasibility and the reliability of the STxMP.

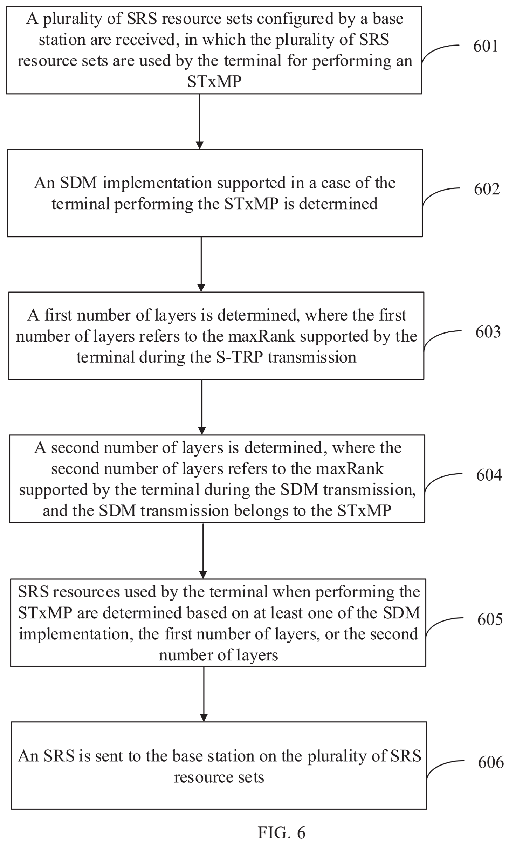

In some embodiments, referring to FIG. 6, which is a flowchart of a signal sending method according to an embodiment. The method may be executed by a base station and may include the following steps.

In step 601, a plurality of SRS resource sets configured by a base station are received, in which the plurality of SRS resource sets are used by the terminal for performing an STxMP.

The specific implementation is similar to that of step 501 above, and will not be repeated here.

In step 602, an SDM implementation supported in a case of the terminal performing the STxMP is determined.

In a possible implementation, the disclosure provides two SDM implementations, which are respectively a first implementation and a second implementation.

In the first implementation, a plurality of antenna ports deployed on a plurality of panels share one or more baseband digital port, and a number of the one or more baseband digital ports is a second value. In this case, the number of the one or more baseband digital ports is less than or equal to a number of antenna ports.

Wherein the number of baseband digital ports (one or more) is equal to a number of baseband transmission chains (Tx Chains). For example, when the terminal has 4 baseband digital ports, the terminal supports 4 baseband Tx Chains.

As shown in FIG. 4A, for example, it is assumed that the terminal has a total of 4 baseband digital ports, which are digital port #1 to digital port #4 respectively. The terminal is deployed with two panels, which are panel #0 and panel #1 respectively. Each panel includes 4 antenna ports, corresponding to antenna port #1 to antenna port #8. The antenna port #1 to antenna port #8 share the 4 baseband digital ports, that is, a connection mode between antenna ports and baseband digital ports is not fixed and may be dynamically scheduled by the network device.

In the second implementation, at least part of antenna ports deployed on a plurality of panels are in a one-to-one correspondence with the one or more baseband digital ports.

As shown in FIG. 4B, for example, a connection relationship between antenna ports and baseband digital ports cannot be changed in this case.

The SDM implementation supported by the terminal may be any of the aforementioned implementations.

In some embodiments, the terminal may needs to report the supported SDM implementation to the base station.

In a possible implementation, the terminal reports terminal capability indication information, informing the base station of the SDM implementation supported by the terminal.

The terminal may report the supported SDM implementation via an IE in an RRC signaling.

In another possible implementation, the terminal may report layer number indication information, informing the base station of the SDM implementation supported by the terminal. The layer number indication information indicates the maxRank supported by the terminal when configured for the STxMP.

In one example, the terminal reports a plurality of maxRanks, and the layer number indication information may indicate the following respectively:

a maxRank supported by the terminal during the S-TRP transmission; and

a maxRank supported by the terminal during the SDM transmission, where the SDM transmission belongs to the STxMP.

In the disclosure, the maxRank refers to the maximum MIMO layers of the PUSCH configured for the terminal by the network device.

For example, when the terminal determines that the supported SDM implementation is the aforementioned first implementation, the layer number indication information reported by the terminal to the base station may indicate a plurality of maxRanks, and values of the plurality of maxRanks are not equal with each other.

For example, when the terminal determines that the supported SDM implementation is the aforementioned second implementation, the layer number indication information reported by the terminal to the base station may indicate a plurality of maxRanks, and values of the plurality of maxRanks are equal with each other.

In another example, when the terminal reports one maxRank, the layer number indication information may indicate that:

the maxRank supported by the terminal during the S-TRP transmission is equal to the maxRank supported by the terminal during the SDM transmission.

For example, the terminal may indicate the supported SDM implementation via a number of reported maxRank.

For example, when the terminal determines that the supported SDM implementation is the first implementation, the layer number indication information reported by the terminal to the base station may indicate a plurality of maxRanks, and values of the plurality of maxRanks may be equal or unequal with each other.

For example, when the terminal determines that the supported SDM implementation is the aforementioned second implementation, the layer number indication information reported by the terminal to the base station may indicate one maxRank.

In step 603, a first number of layers is determined, where the first number of layers refers to the maxRank supported by the terminal during the S-TRP transmission.

In step 604, a second number of layers is determined, where the second number of layers refers to the maxRank supported by the terminal during the SDM transmission, and the SDM transmission belongs to the STxMP.

In step 605, SRS resources used by the terminal when performing the STxMP are determined based on at least one of the SDM implementation, the first number of layers, or the second number of layers.

The implementation of step 605 corresponds to that of step 306 above, and will not be repeated here.

In the embodiments of the disclosure, it should also be noted that the terminal may receive indication information in an explicit signaling sent by the base station, such as the SRS resource indication information carried in DCI, to determine the SRS resources used by the terminal and/or the corresponding SRS resource ports, which is not limited in the disclosure.

In step 606, an SRS is sent to the base station on the plurality of SRS resource sets.

The specific implementation is similar to that of step 502 above, and will not be repeated here.

In the above embodiments, the terminal determines the number of SRS resource ports or the SRS resources to be used based on the plurality of SRS resource sets configured by the base station, and sends the SRS to the base station on the corresponding SRS resources and SRS resource ports, which improves the feasibility and reliability of the STxMP.

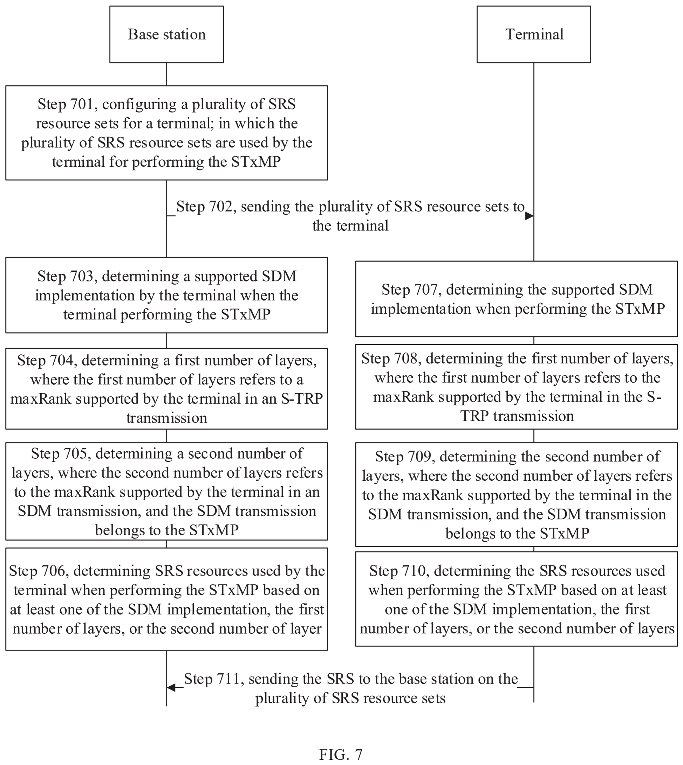

In some embodiments, referring to FIG. 7, which is a flowchart of a signal sending and receiving method according to an embodiment, the method may include the following steps.

In step 701, a base station configures a plurality of SRS resource sets for a terminal; in which the plurality of SRS resource sets are used by the terminal for performing the STxMP.

The implementation of step 701 is similar to that of step 201 above, and will not be repeated here.

In step 702, the base station sends the plurality of SRS resource sets to the terminal.

In step 703, the base station determines a supported SDM implementation by the terminal when the terminal performing the STxMP.

The implementation of step 703 is similar to that of step 303 above, and will not be repeated here.

In step 704, the base station determines a first number of layers, where the first number of layers refers to a maxRank supported by the terminal in an S-TRP transmission.

The implementation of step 704 is similar to that of step 304 above, and will not be repeated here.

In step 705, the base station determines a second number of layers, where the second number of layers refers to the maxRank supported by the terminal in an SDM transmission, and the SDM transmission belongs to the STxMP.

The implementation of step 705 is similar to that of step 305 above, and will not be repeated here.

In step 706, the base station determines SRS resources used by the terminal when performing the STxMP based on at least one of the SDM implementation, the first number of layers, or the second number of layers.

The implementation of step 706 is similar to that of step 306 above, and will not be repeated here.

In step 707, the terminal determines the supported SDM implementation when performing the STxMP.

The implementation of step 707 is similar to that of step 602 above, and will not be repeated here.

In step 708, the terminal determines the first number of layers, where the first number of layers refers to the maxRank supported by the terminal in the S-TRP transmission.

The implementation of step 708 is similar to that of step 603 above, and will not be repeated here.

In step 709, the terminal determines the second number of layers, where the second number of layers refers to the maxRank supported by the terminal in the SDM transmission, and the SDM transmission belongs to the STxMP.

The implementation of step 709 is similar to that of step 604 above, and will not be repeated here.

In step 710, the terminal determines the SRS resources used when performing the STxMP based on at least one of the SDM implementation, the first number of layers, or the second number of layers.

The implementation of step 710 is similar to that of step 605 above, and will not be repeated here.

In step 711, the terminal transmits the SRS to the base station on the plurality of SRS resource sets.

In the above embodiments, the terminal determines the number of SRS resource ports or SRS resources to be used based on the plurality of SRS resource sets configured by the base station, and transmits the SRS to the base station on the corresponding SRS resources and SRS resource ports, which improves the feasibility and reliability of the STxMP.

Further examples of the above solutions are provided as follows.

The SDM implementation supported by the terminal is the first implementation.

The first number of layers corresponding to S-TRP is A, and the second number of layers corresponding to the SDM transmission of the STxMP is B. Thus, a RANK value corresponding to an SDM transmission configuration is B+B. For example, A=4 and B=2.

Two configuration methods are considered for different SRS resource set configurations based on "codebook" and "non-codebook".

Method 1: each SRS resource set configuration based on codebook includes one or more multi-port SRS resources. All SRS resources have the same number of SRS ports, which is A, and all can be used for S-TRP transmission.

The number of SRS resource ports corresponding to the SDM implementation is also A.

Codebook selection:

In an example, TPMI selection from existing uplink codebooks is restricted-only the partial coherent codebooks in the first codebook (with a maximum RANK of B and A PUSCH ports) can be selected. In this case, the number of bits occupied by the corresponding TPMI field remains unchanged.

In another example, a new codebook set is regenerated in the protocol for the selection of SDM precoders under the terminal's structural configuration. The number of bits occupied by the corresponding TPMI field is determined by the number of codebooks in the first codebook set.

Each SRS resource set based on non-codebook includes A single-port SRS resources.

Method 2: each SRS resource set configuration based on codebook includes one or more SRS resources, all with A SRS ports, and all may be used for S-TRP transmission.

The number of SRS ports corresponding to the SDM implementation is B.

Implementation methods for SRS resources corresponding to B ports are described as follows.

In an example, the first B SRS ports are fixedly used (e.g., ports #0 and #1 out of 4 ports).

In another example, B SRS ports are selected at intervals (e.g., ports #0 and #2).

In another example, the terminal selects B SRS ports for transmitting the corresponding SRS resource set.

Each SRS resource set configuration based on non-codebook includes A single-port SRS resources. The SDM implementation corresponds to B SRS resources. The implementation methods for selecting B SRS resources are as follows.

In an example, the first B SRS resources are fixedly used.

In another example, B SRS resources are selected at intervals.

In another example, the terminal selects B SRS resources for transmitting the corresponding SRS resource set.

The SDM implementation supported by the terminal is the second implementation.

Method 3: the first number of layers corresponding to S-TRP is A, and the second number of layers corresponding to SDM is also A. Thus, the RANK value corresponding to the SDM configuration is A+A.

Configuration methods for SRS resource sets based on codebook or non-codebook.

Each SRS resource set configuration based on codebook includes one or more SRS resources, all with A SRS ports. Each SRS resource set configuration based on non-codebook includes one A SRS resources.

Method 4: the first number of layers corresponding to S-TRP is A, and the second number of layers corresponding to SDM is B. Thus, the RANK value corresponding to the SDM configuration is B+B.

In this case, the aforementioned Method 1 or Method 2 may be reused to determine the SRS resources and corresponding SRS resource ports.

In the above embodiments, the terminal may determine the number of SRS resource ports or SRS resources to be used based on the plurality of SRS resource sets configured by the base station, and transmit the SRS to the base station on the corresponding SRS resources and SRS resource ports, which improves the feasibility and reliability of the STxMP.

Corresponding to the aforementioned embodiments of the application function implementation method, the disclosure also provides embodiments of the application function implementation apparatus.

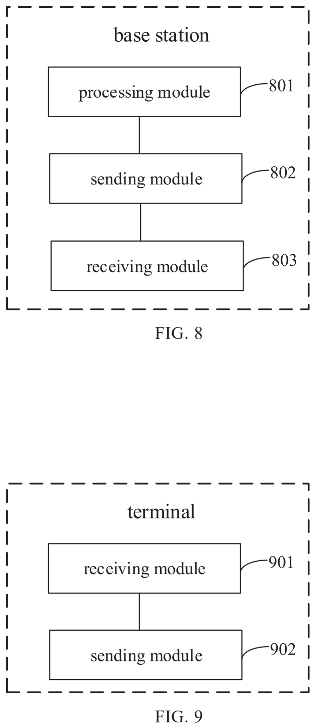

Referring to FIG. 8, which is a block diagram of a base station according to an exemplary embodiment, the base station includes:

a processing module 801, configured to configure a plurality of SRS resource sets for a terminal; in which the plurality of SRS resource sets are used by the terminal to perform an STxMP;
a sending module 802, configured to send the plurality of SRS resource sets to the terminal; and
a receiving module 803, configured to receive an SRS sent by the terminal on the plurality of SRS resource sets.

Referring to FIG. 9, which is a block diagram of a terminal according to an exemplary embodiment, the terminal includes:

a receiving module 901, configured to receive a plurality of SRS resource sets configured by a base station, in which the plurality of SRS resource sets are used by the terminal to perform an STxMP; and
a sending module 902, configured to send an SRS to the terminal on the plurality of SRS resource sets.

Since apparatus embodiments basically correspond to the method embodiments, reference may be made to the relevant descriptions in the method embodiments for details. The apparatus embodiments described above are merely schematic. The units described as separate components may be physically separate or not, and the components shown as units may be physical units or not-i.e., the components may be located in one place, or distributed across a plurality of network units. Some or all of the modules may be selected according to actual needs to achieve the objectives of the solutions of the disclosure. Those of ordinary skill in the art may understand and implement them without exerting creative efforts.

Correspondingly, the disclosure further provides a computer-readable storage medium, which stores a computer program configured to execute any of the aforementioned signal receiving methods.

Correspondingly, the disclosure further provides a computer-readable storage medium, which stores a computer program configured to execute any of the aforementioned signal sending methods.

Correspondingly, the disclosure further provides a communication apparatus, including:

a processor; and
a memory for storing instructions executable by the processor;
in which the processor is configured to execute any of the aforementioned signal receiving methods on the base station side.

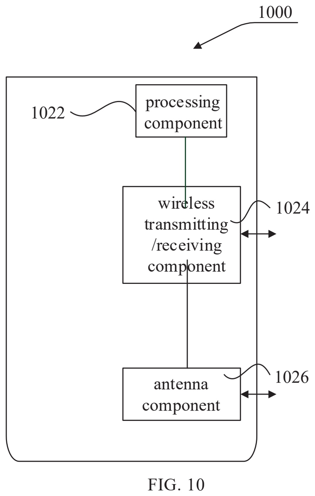

As shown in FIG. 10, which is a schematic diagram of a communication apparatus 1000 according to an embodiment. The communication apparatus 1000 may be provided as a base station. Referring to FIG. 10, the communication apparatus 1000 includes a processing component 1022, a wireless transmitting/receiving component 1024, an antenna component 1026, and signal processing components specific to wireless interfaces. The processing component 1022 may further include at least one processor.

One of the processors in the processing component 1022 may be configured to execute any of the aforementioned signal receiving methods.

Correspondingly, the disclosure further provides a communication apparatus, including:

a processor; and
a memory for storing instructions executable by the processor;
in which the processor is configured to execute any of the aforementioned signal sending methods on the base station side.

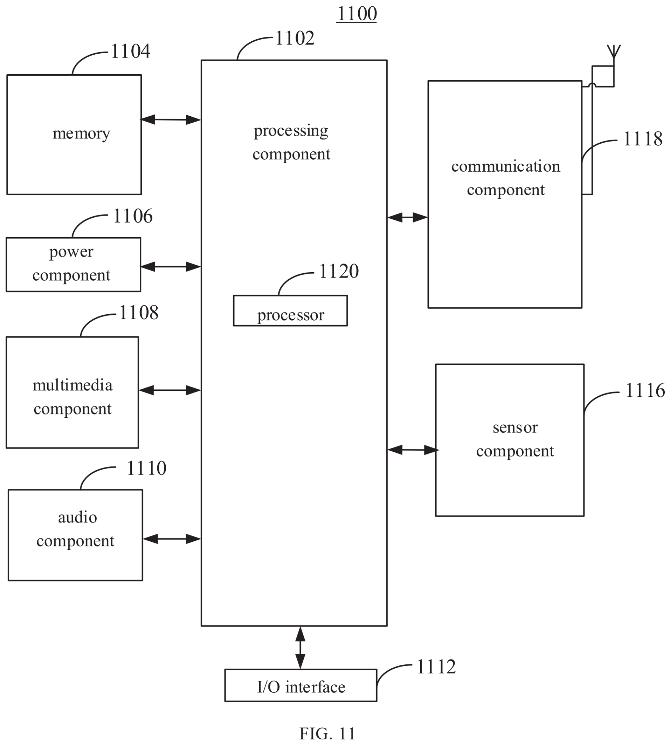

FIG. 11 is a block diagram of a communication apparatus 1100 according to an embodiment. For example, the communication apparatus 1100 may be a terminal such as a mobile phone, a tablet computer, an e-book reader, a multimedia playback device, a wearable device, a vehicle-mounted user equipment, an iPad, or a smart TV.

Referring to FIG. 11, the communication apparatus 1100 may include one or more of the following components: a processing component 1102, a memory 1104, a power component 1106, a multimedia component 1108, an audio component 1110, an input/output (I/O) interface 1112, a sensor component 1116, and a communication component 1118.

The processing component 1102 typically controls overall operations of the communication apparatus 1100, such as the operations associated with display, telephone calls, data communications, camera operations, and recording operations. The processing component 1102 may include one or more processors 1120 to perform all or part of the steps in the above signal sending methods. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102. For another example, the processing component 1102 may read executable instructions from the memory to implement the steps of the signal sending method provided by the aforementioned embodiments.

The memory 1104 is configured to store various types of data to support the operation of the communication apparatus 1100. Examples of such data include instructions for any applications or methods operated on the communication apparatus 1100, contact data, phonebook data, messages, pictures, video, etc. The memory 1104 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read only memory (PROM), a read only memory (ROM), a magnetic memory, a flash memory, a magnetic or optical disk.

The power component 1106 provides power to various components of the communication apparatus 1100. The power component 1106 may include a power management system, one or more power sources, and any other components associated with the generation, management, and distribution of power in the communication apparatus 1100.

The multimedia component 1108 includes a displaying screen providing an output interface between the communication apparatus 1100 and the user. In some embodiments, the multimedia component 1108 includes a front-facing camera and/or a rear-facing camera. When the communication apparatus 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the communication apparatus 1100 is in an operation mode, such as a call mode, a recording mode, and a voice recognition mode. The received audio signal may be further stored in the memory 1104 or transmitted via the communication component 1118. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1116 includes one or more sensors to provide status assessments of various aspects of the communication apparatus 1100. For instance, the sensor component 1116 may detect an open/closed status of the communication apparatus 1100, relative positioning of components, e.g., the display and the keypad, of the communication apparatus 1100, a change in position of the communication apparatus 1100 or a component of the communication apparatus 1100, a presence or absence of user contact with the communication apparatus 1100, an orientation or an acceleration/deceleration of the communication apparatus 1100, and a change in temperature of the communication apparatus 1100. The sensor component 1116 may include a proximity sensor configured to detect the presence of nearby objects without any physical contact. The sensor component 1116 may also include a light sensor, such as a complementary metal oxide semiconductor (CMOS) or charge-coupled device (CCD) image sensor, for use in imaging applications. In some embodiments, the sensor component 1116 may also include an accelerometer sensor, a gyroscope sensor, a magnetic sensor, a pressure sensor, or a temperature sensor.

The communication component 1118 is configured to facilitate communication, wired or wirelessly, between the communication apparatus 1100 and other devices. The communication apparatus 1100 can access a wireless network based on a communication standard, such as Wi-Fi, 2G or 3G, or a combination thereof. In an exemplary embodiment, the communication component 1118 receives a broadcast signal or broadcast associated information from an external broadcast management system via a broadcast channel. In an exemplary embodiment, the communication component 1118 further includes a near field communication (NFC) module to facilitate short-range communication. For example, the NFC module may be implemented based on a radio frequency identification (RFID) technology, an infrared data association (IrDA) technology, an ultra-wide band (UWB) technology, a blue tooth (BT) technology, and other technologies.

In some exemplary embodiments, the communication apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing any above signal sending method performed by the terminal.

In an embodiment, there is also provided a non-transitory computer-readable storage medium containing instructions, such as the memory 1104 including instructions, where the above-mentioned instructions may be executed by the processor 1120 of the communication apparatus 1100 to implement the above-mentioned signal sending method. For example, the storage medium may be a read-only memory (ROM), a random access memory (RAM), compact disc-ROM (CD-ROM), a magnetic tape, a floppy disk, an optical data storage device, etc.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as illustrative only, with a true scope and spirit of the disclosure being indicated by the following claims.

It should be understood that the embodiments of the disclosure are not limited to the precise structures that have been described above and shown in the accompanying drawings, and various modifications and changes may be made without departing from their scope. The scope of the embodiments of the disclosure is limited only by the appended claims.

## Claims

1.  A signal receiving method, performed by a base station, comprising:

    configuring a plurality of sounding reference signal (SRS) resource sets for a terminal; wherein the plurality of SRS resource sets are used by the terminal to perform a simultaneous transmission from multiple panels (STxMP);
    sending the plurality of SRS resource sets to the terminal; and
    receiving an SRS sent by the terminal from the plurality of SRS resource sets.

2.  The signal receiving method according to claim 1, wherein the plurality of SRS resource sets are used by the terminal to perform a codebook-based STxMP, each SRS resource set comprises one or more SRS resources, and each SRS resource corresponds to the same number of SRS resource ports.

3.  The signal receiving method according to claim 1, wherein the plurality of SRS resource sets are used by the terminal to perform a non-codebook-based STxMP, each SRS resource set comprises SRS resources of a first value, and each SRS resource corresponds one SRS resource port.

4.  The signal receiving method according to any one of claims 1 to 3, further comprising: sending indication information to the terminal, wherein the indication information indicates the terminal to perform a single transmission reception point (S-TRP) transmission or a multi-transmission reception point (M-TRP) transmission.

5.  The signal receiving method according to claim 1, further comprising:

determining a space division multiplexing (SDM) implementation supported by the terminal in a case of the terminal performing the STxMP;

determining a first number of layers, wherein the first number of layers is a maximum number of transmission layers supported by the terminal in an S-TRP transmission;

determining a second number of layers, wherein the second number of layers is a maximum number of transmission layers supported by the terminal in an SDM transmission, and the SDM transmission belongs to the STxMP; and

determining, based on at least one of the SDM implementation, the first number of layers, or the second number of layers, SRS resources used by the terminal in the STxMP.

6. The signal receiving method according to claim 5, wherein the SDM implementation is any one of:

a first implementation, where a plurality of antenna ports deployed on a plurality of panels share one or more baseband digital ports, and a number of the one or more baseband digital ports is a second value; and

a second implementation, where at least part of antenna ports deployed on a plurality of panels are in a one-to-one correspondence with the one or more baseband digital ports.

7. The signal receiving method according to claim 5, wherein determining, based on at least one of the SDM implementation, the first number of layers, or the second number of layers, the SRS resources used by the terminal in the STxMP comprises:

determining that the terminal performs a codebook-based STxMP, and a number of SRS resource ports corresponding to the S-TRP transmission is a third value; and

determining that a number of SRS resource ports corresponding to the SDM implementation is the third value.

8. The signal receiving method according to claim 5, wherein determining, based on at least one of the SDM implementation, the first number of layers, or the second number of layers, the SRS resources used by the terminal in the STxMP comprises:

determining that the terminal performs a non-codebook-based STxMP, and a number of SRS resources corresponding to the S-TRP transmission is a third value; and

determining that a number of SRS resources corresponding to the SDM implementation is the third value.

9. The signal receiving method according to claim 7 or 8, wherein

the third value is equal to the first number of layers; or

the third value is equal to the second number of layers.

10. The signal receiving method according to claim 9, further comprising:

sending downlink control information (DCI) to the terminal, wherein the DCI comprises a transmission precoding matrix indicator (TPMI) field;

wherein in a case where the first number of layers is not equal to the second number of layers, and the third value is equal to the first number of layers, first codebooks corresponding to the TPMI field are used to indicate partial coherent codewords, a number of physical uplink shared channel (PUSCH) ports actually corresponding to a first TPMI indicated by the TPMI field is a fourth value, and the first TPMI is a TPMI used by the terminal in a case of the terminal sending the PUSCH in different TRP directions; or

wherein a number of bits occupied by the TPMI field is determined by a number of first codebooks corresponding to the TPMI field.

11. The signal receiving method according to claim 10, wherein the fourth value is determined by a quotient of a first value divided by a number of cooperative TRPs.

12. A signal sending method, performed by a terminal, comprising:

receiving a plurality of sounding reference signal (SRS) resource sets configured by a base station, wherein the plurality of SRS resource sets are used by the terminal to perform a simultaneous transmission from multiple panels (STxMP); and

sending an SRS to the base station on the plurality of SRS resource sets.

13. The signal sending method according to claim 12, wherein the plurality of SRS resource sets are used by the terminal to perform a codebook-based STxMP, each SRS resource set comprises one or more SRS resources, and each SRS resource corresponds to the same number of SRS resource ports.

14. The signal sending method according to claim 12, wherein the plurality of SRS resource sets are used by the terminal to perform a non-codebook-based STxMP, each SRS resource set comprises SRS resources of a first value, and each SRS resource corresponds one SRS resource port.

15. The signal sending method according to any one of claims 12 to 14, further comprising:

receiving indication information to the terminal, wherein the indication information indicates the terminal to perform a single transmission reception point (S-TRP) transmission or a multi-transmission reception point (M-TRP) transmission; and
determining, according to the indication information, to perform the S-TRP transmission or the M-TRP transmission.

16. The signal sending method according to claim 15, further comprising:

determining a space division multiplexing (SDM) implementation supported in a case of performing the STxMP;
determining a first number of layers, wherein the first number of layers is a maximum number of transmission layers supported by the terminal in an S-TRP transmission;
determining a second number of layers, wherein the second number of layers is a maximum number of transmission layers supported by the terminal in an SDM transmission, and the SDM transmission belongs to the STxMP; and
determining, based on at least one of the SDM implementation, the first number of layers, or the second number of layers, SRS resources used in a case of performing the STxMP.

17. The signal sending method according to claim 16, wherein the SDM implementation is any one of:

a first implementation, where a plurality of antenna ports deployed on a plurality of panels share one or more baseband digital ports, and a number of the one or more baseband digital ports is a second value; and
a second implementation, where at least part of antenna ports deployed on a plurality of panels are in a one-to-one correspondence with the one or more baseband digital ports.

18. The signal sending method according to claim 16, wherein determining, based on at least one of the SDM implementation, the first number of layers, or the second number of layers, the SRS resources used in a case of performing the STxMP comprises:

determining to perform a codebook-based STxMP, wherein a number of SRS resource ports corresponding to the S-TRP transmission is a third value; and
determining that a number of SRS resource ports corresponding to the SDM implementation is the third value.

19. The signal sending method according to claim 16, wherein determining, based on at least one of the SDM implementation, the first number of layers, or the second number of layers, the SRS resources SRS resources used in a case of performing the STxMP comprises:

determining to perform a non-codebook-based STxMP, wherein a number of SRS resources corresponding to the S-TRP transmission is a third value; and
determining that a number of SRS resources corresponding to the SDM implementation is the third value.

20. The signal sending method according to claim 18 or 19, wherein

the third value is equal to the first number of layers; or
the third value is equal to the second number of layers.

21. The signal sending method according to claim 20, further comprising:

receiving downlink control information (DCI) sent by the base station, wherein the DCI comprises a transmission precoding matrix indicator (TPMI) field;

wherein in a case where the first number of layers is not equal to the second number of layers, and the third value is equal to the first number of layers, first codebooks corresponding to the TPMI field indicates partial coherent codewords, a number of physical uplink shared channel (PUSCH) ports actually corresponding to a first TPMI indicated by the TPMI field is a fourth value, and the first TPMI is a TPMI used by the terminal in a case of the terminal sending the PUSCH in different TRP directions; or

wherein a number of bits occupied by the TPMI field is determined by a number of first codebooks corresponding to the TPMI field.

22. The signal sending method according to claim 21, wherein the fourth value is determined by a quotient of a first value divided by a number of cooperative TRPs.

23. A base station, comprising:

a processing module, configured to configure a plurality of sounding reference signal (SRS) resource sets for a terminal; wherein the plurality of SRS resource sets are used by the terminal to perform a simultaneous transmission from multiple panels (STxMP);
a sending module, configured to send the plurality of SRS resource sets to the terminal; and
a receiving module, configured to receive an SRS sent by the terminal on the plurality of SRS resource sets.

24. A terminal, comprising:

a receiving module, configured to receive a plurality of sounding reference signal (SRS) resource sets configured by a base station, wherein the plurality of SRS resource sets are used by the terminal to perform a simultaneous transmission from multiple panels (STxMP); and
a sending module, configured to send an SRS to the terminal on the plurality of SRS resource sets.

25. A computer-readable storage medium storing a computer program, wherein the computer program is configured to execute the signal receiving method according to any one of claims 1 to 11 or the signal sending method according to any one of claims 12 to 22.

26. A communication apparatus, comprising:

a processor; and
a memory for storing instructions executable by the processor;
wherein the processor is configured to execute the signal receiving method according to any one of claims 1 to 11 or the signal sending method according to any one of claims 12 to 22.

FIG. 1A

FIG. 1B

A plurality of SRS resource sets are configured for a terminal, in which the plurality of SRS resource sets are used by the terminal to perform an STxMP — 201

The plurality of SRS resource sets are sent to the terminal — 202

An SRS sent by the terminal from the plurality of SRS resource sets is received — 203

FIG. 2

A plurality of SRS resource sets are configured for a terminal, in which the plurality of SRS resource sets are used by the terminal to perform an STxMP — 301

The plurality of SRS resource sets are sent to the terminal — 302

An SDM implementation supported by the terminal in a case of the terminal performing the STxMP is determined — 303

A first number of layers is determined, where the first number of layers refers to the maxRank supported by the terminal during the S-TRP transmission — 304

A second number of layers is determined, where the second number of layers refers to the maxRank supported by the terminal during the SDM transmission, and the SDM transmission belongs to the STxMP — 305

SRS resources used by the terminal when performing the STxMP are determined based on at least one of the SDM implementation, the first number of layers, or the second number of layers — 306

An SRS sent by the terminal from the plurality of SRS resource sets is received — 307

FIG. 3

Panel#0 Panel#1

antenna port #1, antenna port #2, antenna port #3, antenna port #4

antenna port #5, antenna port #6, antenna port #7, antenna port #8

baseband digital port

— — — — dynamic connection

FIG. 4A

Panel#0 Panel#1

antenna port #1, antenna port #2, antenna port #3, antenna port #4

antenna port #5, antenna port #6, antenna port #7, antenna port #8

baseband digital port

———— fixed connection

FIG. 4B

A plurality of SRS resource sets configured by a base
station are received, in which the plurality of SRS
resource sets are used by the terminal for performing an
STxMP

501

An SRS is sent to the base station on the plurality of SRS
resource sets

502

FIG. 5

```
┌─────────────────────────────────────────┐
│  A plurality of SRS resource sets        │
│  configured by a base station are         │ ─── 601
│  received, in which the plurality of SRS  │
│  resource sets are used by the terminal   │
│  for performing an STxMP                  │
└─────────────────────────────────────────┘
                    │
                    ▼
┌─────────────────────────────────────────┐
│  An SDM implementation supported in a     │ ─── 602
│  case of the terminal performing the      │
│  STxMP is determined                      │
└─────────────────────────────────────────┘
                    │
                    ▼
┌─────────────────────────────────────────┐
│  A first number of layers is determined,  │
│  where the first number of layers refers  │ ─── 603
│  to the maxRank supported by the          │
│  terminal during the S-TRP transmission   │
└─────────────────────────────────────────┘
                    │
                    ▼
┌─────────────────────────────────────────┐
│  A second number of layers is determined, │
│  where the second number of layers refers │
│  to the maxRank supported by the terminal │ ─── 604
│  during the SDM transmission, and the     │
│  SDM transmission belongs to the STxMP    │
└─────────────────────────────────────────┘
                    │
                    ▼
┌─────────────────────────────────────────┐
│  SRS resources used by the terminal when  │
│  performing the STxMP are determined      │
│  based on at least one of the SDM         │ ─── 605
│  implementation, the first number of      │
│  layers, or the second number of layers   │
└─────────────────────────────────────────┘
                    │
                    ▼
┌─────────────────────────────────────────┐
│  An SRS is sent to the base station on    │ ─── 606
│  the plurality of SRS resource sets       │
└─────────────────────────────────────────┘
```

FIG. 6

| Base station | Terminal |
|---|---|

Step 701, configuring a plurality of SRS resource sets for a terminal; in which the plurality of SRS resource sets are used by the terminal for performing the STxMP

Step 702, sending the plurality of SRS resource sets to the terminal

| Step 703, determining a supported SDM implementation by the terminal when the terminal performing the STxMP | Step 707, determining the supported SDM implementation when performing the STxMP |
|---|---|
| Step 704, determining a first number of layers, where the first number of layers refers to a maxRank supported by the terminal in an S-TRP transmission | Step 708, determining the first number of layers, where the first number of layers refers to the maxRank supported by the terminal in the S-TRP transmission |
| Step 705, determining a second number of layers, where the second number of layers refers to the maxRank supported by the terminal in an SDM transmission, and the SDM transmission belongs to the STxMP | Step 709, determining the second number of layers, where the second number of layers refers to the maxRank supported by the terminal in the SDM transmission, and the SDM transmission belongs to the STxMP |
| Step 706, determining SRS resources used by the terminal when performing the STxMP based on at least one of the SDM implementation, the first number of layers, or the second number of layer | Step 710, determining the SRS resources used when performing the STxMP based on at least one of the SDM implementation, the first number of layers, or the second number of layers |

Step 711, sending the SRS to the base station on the plurality of SRS resource sets

FIG. 7

base station

processing module —801

sending module —802

receiving module —803

FIG. 8

terminal

receiving module —901

sending module —902

FIG. 9

1000

processing component

1022

wireless transmitting /receiving component

1024

antenna component

1026

FIG. 10

FIG. 11

## INTERNATIONAL SEARCH REPORT

| International application No. |
|---|
| **PCT/CN2023/087107** |

| A. | CLASSIFICATION OF SUBJECT MATTER |
|---|---|

H04L5/00(2006.01)i

According to International Patent Classification (IPC) or to both national classification and IPC

| B. | FIELDS SEARCHED |
|---|---|

Minimum documentation searched (classification system followed by classification symbols)

IPC: H04L: H04W

Documentation searched other than minimum documentation to the extent that such documents are included in the fields searched

Electronic data base consulted during the international search (name of data base and, where practicable, search terms used)

3GPP, CNTXT, ENTXTC, DWPI, ENTXT: 探测参考信号, 资源, 集, 组, 多, 面板, 传输接收点, 空分复用, 层, 码本, SRS, RESOURCE, SET, GROUP, MULTI, PANEL, TRP, SDM, LAYER, CODEBOOK, CB, TPMI.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115299160 A (LG ELECTRONICS INC.) 04 November 2022 (2022-11-04) description, paragraphs 207-340, and figure 9 | 1-26 |
| X | CN 113271188 A (DATANG MOBILE COMMUNICATIONS EQUIPMENT CO., LTD.) 17 August 2021 (2021-08-17) description, paragraphs 108-204 | 1-26 |
| A | CN 115004598 A (BEIJING XIAOMI MOBILE SOFTWARE CO., LTD.) 02 September 2022 (2022-09-02) entire document | 1-26 |
| A | CN 110741592 A (TELEFONAKTIEBOLAGET LM ERICSSON (PUBL)) 31 January 2020 (2020-01-31) entire document | 1-26 |
| A | INTEL CORP. ""R1-1716289 Discussion on multi-panel and multi-TRP operation"" *3GPP tsg_ran\WG1_RL1*, 12 September 2017 (2017-09-12), sections 2-4 | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **14 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 693 994 A1

**INTERNATIONAL SEARCH REPORT**
**Information on patent family members**

International application No.

**PCT/CN2023/087107**

| Patent document cited in search report | | | Publication date (day/month/year) | Patent family member(s) | | | Publication date (day/month/year) |
|---|---|---|---|---|---|---|---|
| CN | 115299160 | A | 04 November 2022 | EP | 4124141 | A1 | 25 January 2023 |
| | | | | US | 2023118905 | A1 | 20 April 2023 |
| | | | | WO | 2021187823 | A1 | 23 September 2021 |
| | | | | JP | 2023517732 | A | 26 April 2023 |
| | | | | KR | 20220134594 | A | 05 October 2022 |
| CN | 113271188 | A | 17 August 2021 | None | | | |
| CN | 115004598 | A | 02 September 2022 | None | | | |
| CN | 110741592 | A | 31 January 2020 | JP | 2022070889 | A | 13 May 2022 |
| | | | | JP | 7307826 | B2 | 12 July 2023 |
| | | | | ZA | 201907553 | B | 28 April 2021 |
| | | | | RU | 2730892 | C1 | 26 August 2020 |
| | | | | US | 2020162133 | A1 | 21 May 2020 |
| | | | | EP | 3639459 | A1 | 22 April 2020 |
| | | | | EP | 3639459 | A4 | 07 April 2021 |
| | | | | WO | 2018231141 | A1 | 20 December 2018 |
| | | | | JP | 2020523912 | A | 06 August 2020 |
| | | | | JP | 7021264 | B2 | 16 February 2022 |
| | | | | BR | 112019026710 | A2 | 30 June 2020 |

Form PCT/ISA/210 (patent family annex) (July 2022)